# EUROPEAN PATENT APPLICATION

(11) **EP 0 705 052 A2**
(43) Date of publication of application: **03.04.1996**
(21) Application number: 95306564.6
(22) Date of filing: 18.09.1995
(51) Int. Cl.: H04Q 11/04, H04J 3/18

(54) **Digital speech communication system**

(30) Priority: 22.09.1994 IL 11104394; 01.09.1995 IL 11513295
(71) Applicant: ECI TELECOM LTD., 49 130 Petach Tikva (IL)
(72) Inventor: Guata, Haim, Raanana 43256 (IL); Sourani, Sason, Hod Hasharon 45272 (IL)
(74) Representative: Brunner, Michael John

(57) **Abstract**

A digital communication system including at least one signal source producing a signal, at least one signal compressor associated with the signal source for operating on the signal and providing a compressed signal, at least one signal receiver including a decompressor for decompressing the compressed signal; and an intermediate switch receiving at least one compressed signal and forwarding it to the signal receiver, the intermediate switch operating on the compressed signal.

## Description

The present invention relates to digital communication generally and more particularly to digital communication networks carrying speech, facsimile and other signals and employing compression.

In recent years, telecommunications has moved increasingly towards digital networks for carrying speech, facsimile and other signals. This trend has been accompanied by a greatly increased use of digital compression and decompression equipment.

It is well known that each time speech, facsimile and other signals undergo compression and decompression, a degradation in the signal quality results. Often, calls are routed through multiple switches, containing compression and decompression devices. This may result in an unacceptable level of signal quality and undesirable delay.

### SUMMARY OF THE INVENTION

The present invention seeks to provide an improved telecommunications network which avoids signal quality degradation due to multiple compression and decompression.

There is thus provided in accordance with a preferred embodiment of the present invention a digital communication system including:
at least one signal source producing a signal;
at least one signal compressor associated with the at least one signal source for operating on the signal and providing a compressed signal;
at least one signal receiver including a decompressor for decompressing the compressed signal; and
an intermediate switch receiving at least one compressed signal and forwarding the at least one compressed signal to the at least one signal receiver, the intermediate switch operating on the at least one compressed signal.

There is also provided in accordance with a preferred embodiment of the present invention, a digital communication method including:
causing at least one signal source to produce a signal;
causing at least one signal compressor associated with the at least one signal source to operate on the signal and provide a compressed signal;
causing a decompressor to decompresses a signal at at least one signal receiver; and
employing an intermediate switch to receive at least one compressed signal and forward the at least one compressed signal to the at least one signal receiver, the intermediate switch operating on the at least one compressed signal.

Preferably, the signal compressor and signal decompressor are selectably operable.

In accordance with a preferred embodiment of the present invention, the system includes message generation and detection apparatus operative to detect at one site the presence of a signal compressor and decompressor at another site.

Preferably, the signal compressor and signal decompressor are selectably operable in response to detection by the message generation and detection apparatus.

In accordance with a preferred embodiment of the present invention, multiple signal compressors and signal receivers including signal decompressors are provided and detection and selectable operation of the signal compressors and signal decompressors takes place time slot by time slot.

Preferably, detection and selectable operation of the signal compressor and signal decompressor takes place time independently for each session.

Preferably, detection and selectable operation of the signal compressor and signal decompressor takes place time continuously.

In accordance with a preferred embodiment of the present invention. filler bits are supplied to the intermediate switch along with the compressed signal.

Preferably, the filler bits are dummy bits.

Alternatively, the filler bits may include decompressed signal bits.

In accordance with a preferred embodiment of the present invention a number of filler bits is supplied to the intermediate switch per signal portion, the number being approximately equal to the difference between the fixed number of bits and the number of bits per compressed signal portion.

Preferably, the number of filler bits is an integer; alternatively it is a non-integer.

Preferably, the fixed number of bits is equal to 8.

In accordance with a preferred embodiment of the intermediate switch operates on PCM coded speech signals.

There is also provided in accordance with a preferred embodiment of the present invention a digital speech communication system including:
a multiplicity of speech signal sources each providing a speech signal;
speech compressors associated with the multiplicity of speech signal sources for operating on the speech signals and providing compressed speech signals;
at least a plurality of speech signal receivers each including a speech decompressor for decompressing a speech signal; and
an intermediate switch operating on a fixed number of bits per speech signal sample, receiving the speech signals and forwarding at least some of them individually to ones of the at least a plurality of speech signal receivers, the intermediate switch operating on the compressed speech signal outputs without decompression thereof.

There is also provided in accordance with a preferred embodiment of the present invention a digital speech communication method including:
causing a multiplicity of speech signal sources each to provide a speech signal;
causing speech compressors associated with the multiplicity of speech signal sources to operate on the speech signals and provide compressed speech signals;
causing a speech decompressor to decompress a speech signal at at least a plurality of speech signal receivers; and
employing an intermediate switch to operate on a fixed number of bits per speech signal sample, the intermediate switch receiving the speech signals and forwarding at least some of them individually to ones of the at least a plurality of speech signal receivers, the intermediate switch operating on the compressed speech signal outputs without decompression thereof.

Preferably, the fixed number of bits per speech signal sample is greater than the number of bits per speech signal sample in the compressed speech signals.

In accordance with a preferred embodiment of the present invention, non-speech bearing bits are supplied to the intermediate switch along with the compressed speech signals.

Preferably, a number of non-speech bearing bits is supplied to the intermediate switch per speech sample equal to the difference between the fixed number of bits and the number of bits per speech signal sample in the compressed speech signals.

In accordance with one preferred embodiment of the present invention, the fixed number of bits is equal to 8. Alternatively any other suitable number of bits may be employed.

Preferably, the intermediate switch operates on PCM coded speech signals. Alternatively, the intermediate switch may operate on any suitable type of speech signals.

### BRIEF DESCRIPTION OF THE DRAWINGS

The present invention will be understood and appreciated more fully from the following detailed description, taken in conjunction with the drawings in which:
Figs. 1A & 1B together constitute a simplified block diagram illustration of part of a telecommunications network constructed and operative in accordance with a preferred embodiment of the present invention;
Fig. 2 is a simplified block diagram illustration of part of a PBX based telephone network constructed and operative in accordance with a preferred embodiment of the present invention;
Fig. 3 is a simplified illustration of the assignment of dummy bits to speech information at the input to compression apparatus associated with an intermediate switch in accordance with a preferred embodiment of the present invention;
Fig. 4 is a simplified illustration of the structure of a multiplexer-demultiplexer useful in the apparatus of Figs. 1A & 1B;
Figs. 5A & 5B together constitute a simplified block diagram illustration of part of a telecommunications network constructed and operative in accordance with a most preferred embodiment of the present invention; and
Fig. 6 is a simplified illustration of the structure of an enhanced multiplexer-demultiplexer useful in the apparatus of Figs. 5A & 5B.

### DETAILED DESCRIPTION OF PREFERRED EMBODIMENTS

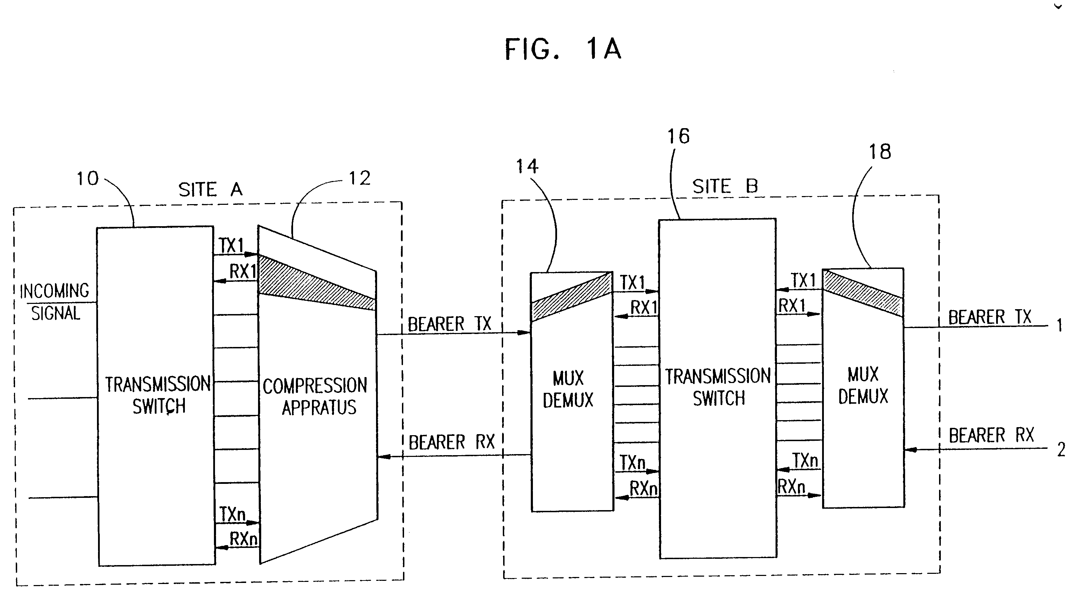

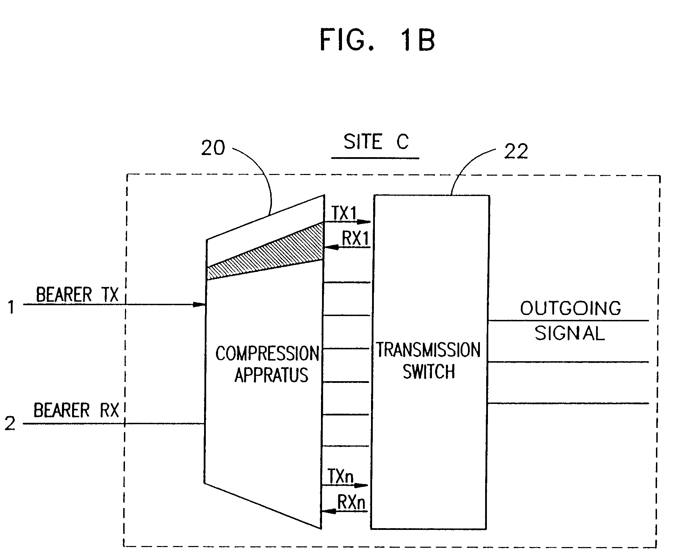

Reference is now made to Figs. 1A & 1B, which illustrate part of a telecommunications network constructed and operative in accordance with a preferred embodiment of the present invention. Here it is assumed that a call containing speech originates from Site A and is directed to Site C, being routed via site B.

It will be appreciated that the description which follows relates to the example of speech transmission, while the invention is not limited to speech applications. The invention may be applicable as well to facsimile transmissions and to transmissions of other types of signals or combinations thereof.

A transmission switch 10 at Site A directs the call via compression apparatus 12 at Site A, which compresses the speech.

In accordance with a preferred embodiment of the invention, at Site B, the call containing compressed speech is not decompressed by multiplexer-dimultiplexer apparatus 14. Instead the call is transferred digitally to a transmission switch 16 at Site B in a manner such that transmission switch 16 treats it like any other call.

Furthermore, multiplexer-demultiplexer apparatus 18 at the output end of transmission switch 16 at Site B, does not compress the call, but rather transfers it, exactly as received from Site A, to Site C, where it is decompressed by decompression apparatus 20 associated with a transmission switch 22, which directs the signal to the intended subscriber.

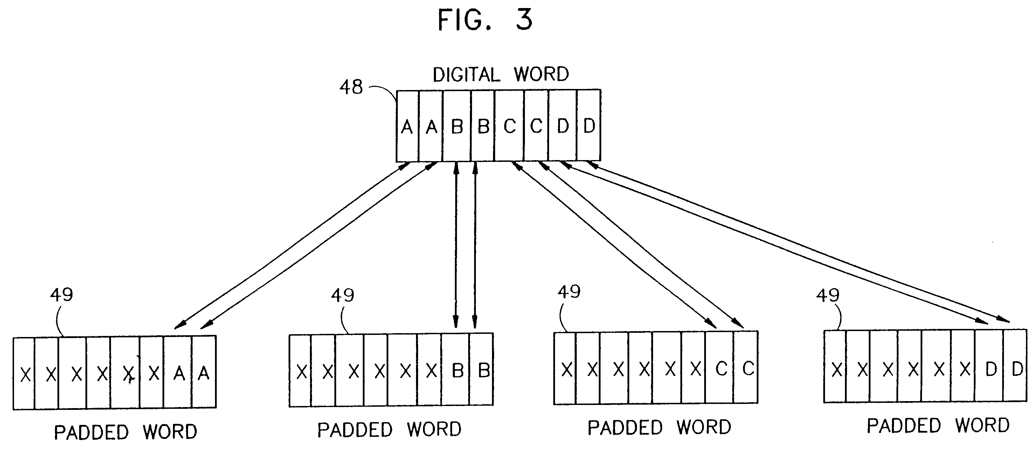

In accordance with a preferred embodiment of the present invention, multiplexer-demultiplexer apparatus 14 is operative to combine the compressed bits of each call and arrange them in digital words containing dummy bits, as illustrated in Fig. 3 and described hereinbelow.

Further in accordance with a preferred embodiment of the present invention multiplexer-demultiplexer apparatus 18 is operative to rearrange the compressed bits in the form that they arrived at multiplexer-demultiplexer apparatus 14.

It is to be appreciated that although only a single intermediate site is shown in Figs. 1A & 1B, a call may pass through any suitable number of intermediate sites and, in accordance with a preferred embodiment of the present invention, not undergo compression or decompression thereat.

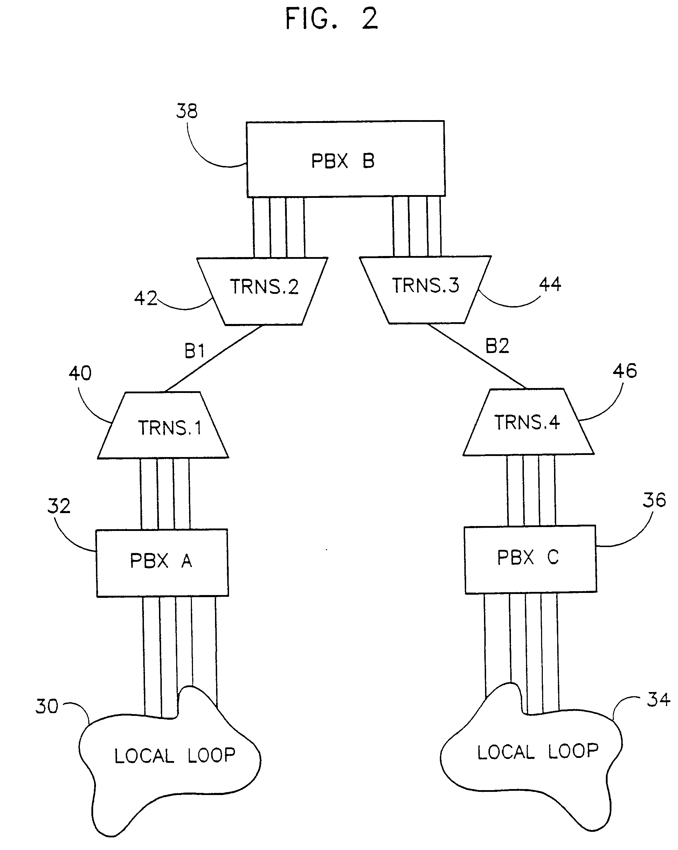

Reference is now made to Fig. 2, which is a simplified block diagram illustration of part of a PBX based telephone network constructed and operative in accordance with a preferred embodiment of the present invention. Here it is assumed that a call containing speech originates from a local loop 30 associated with a PBX A 32 and is directed to a local loop 34 associated with a PBX C 36, being routed via a PBX B 38.

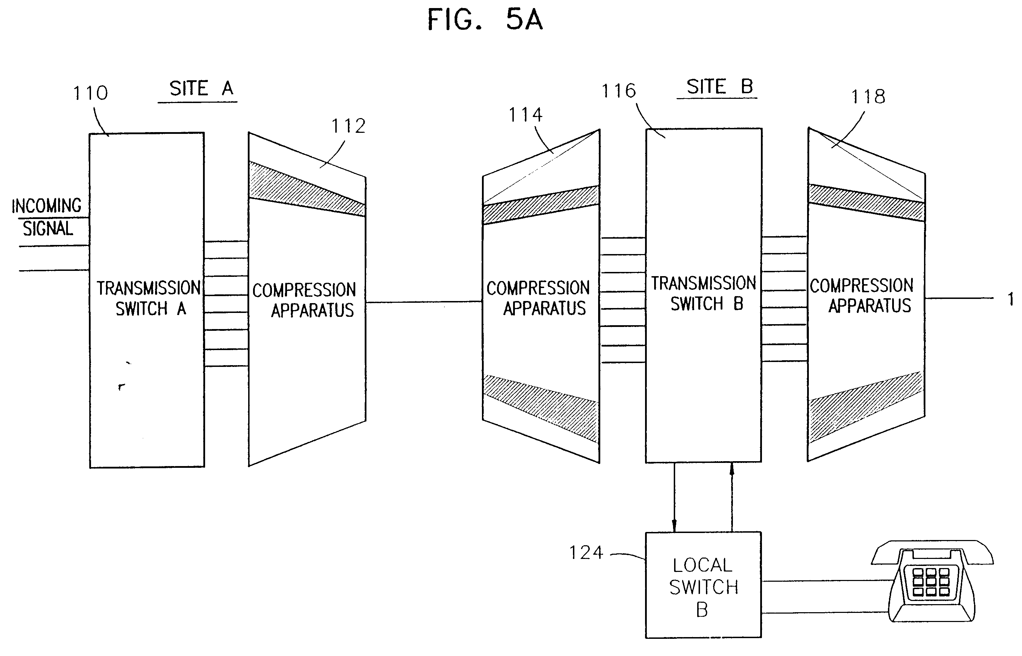

PBX A 32 directs the call via a first transcoder 40 to a second transcoder 42 via a bearer channel B1. The first and second transcoders 40 and 42 typically correspond to the compression apparatus 12 and multiplexer-demultiplexer apparatus 14 shown in Fig. 1A. They may also correspond to the compression apparatus 112 and 114 in Fig. 5A. In accordance with a preferred embodiment of the present invention, the second transcoder is operative to combine the compressed bits of each call and arrange them in digital words containing dummy bits, as illustrated in Fig. 3 and described hereinbelow.

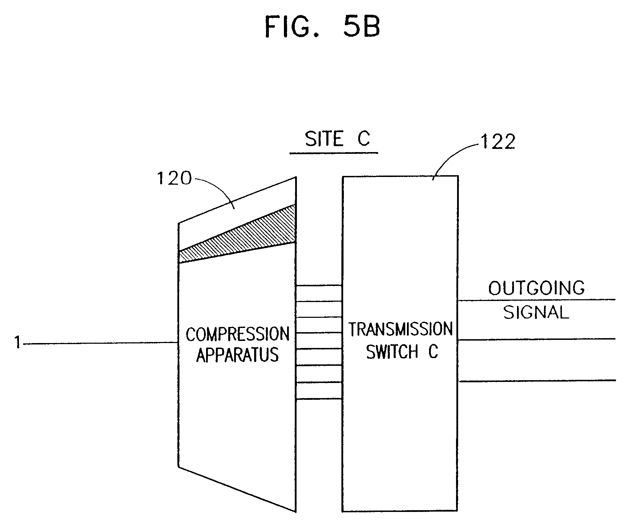

PBX B 38 directs the call through a third transcoder 44 which is operative in accordance with a preferred embodiment of the present invention to rearrange the compressed bits in the form that they arrived along bearer channel B1 and direct them along a bearer channel B2 to a fourth transcoder 46 which decompresses the speech. The third and fourth transcoders 44 and 46 correspond to multiplexer-demultiplexer apparatus 18 and 20 as shown in Figs. 1A and 1B. The third and fourth transcoders 44 and 46 may also correspond to the compression apparatus 118 and 120 in Figs. 5A and 5B.

It is to be appreciated that although only a single intermediate site is shown in Fig. 2, a call may pass through any suitable number of intermediate sites and, in accordance with a preferred embodiment of the present invention, not undergo compression or decompression thereat.

It is also appreciated that although only two bearer inputs are shown to PBX B, it fact a greater number of bearers may be operatively coupled thereto. It is noted that although two transcoders 42 and 44 are shown in Fig. 2, in fact a greater or lesser number of transcoders may be employed and each transcoder can handle more than one bearer.

Reference is now made to Fig. 3, which is a simplified illustration of the assignment of dummy bits to speech information at the input to multiplexer-demultiplexer apparatus associated with an intermediate switch in accordance with a preferred embodiment of the present invention.

Fig. 3 shows one example of assignment of dummy bits to speech information, it being understood that many other examples are also valid. The example of Fig. 3 applies to LD-CELP compression algorithms according to ITU-T Recommendation G.728, which operates at 16 Kbits/sec.

It is seen that an incoming digital word 48, typically containing 8 bits and representing a four channel (A,B,C,D) compressed speech output from either compression apparatus 12 (Figs. 1A & 1B) or transcoder 40 (Fig. 2) is broken up into multiple digital words 49, each containing typically two bits from each channel and 6 dummy bits. This break-up is carried out by multiplexer-demultiplexer apparatus 14 (Figs. 1A & 1B) or by transcoder 42 (Fig. 2).

The resulting digital words each containing two speech bits and 6 dummy bits, are switched by the transmission switch 16 (Figs. 1A & 1B) or the PBX B 38 (Fig. 2) just as any other digital word, i.e. transparently.

The digital word containing 8 speech bits is reconstructed by multiplexer-demultiplexer apparatus 18 (Figs. 1A & 1B) or by transcoder 44 (Fig. 2).

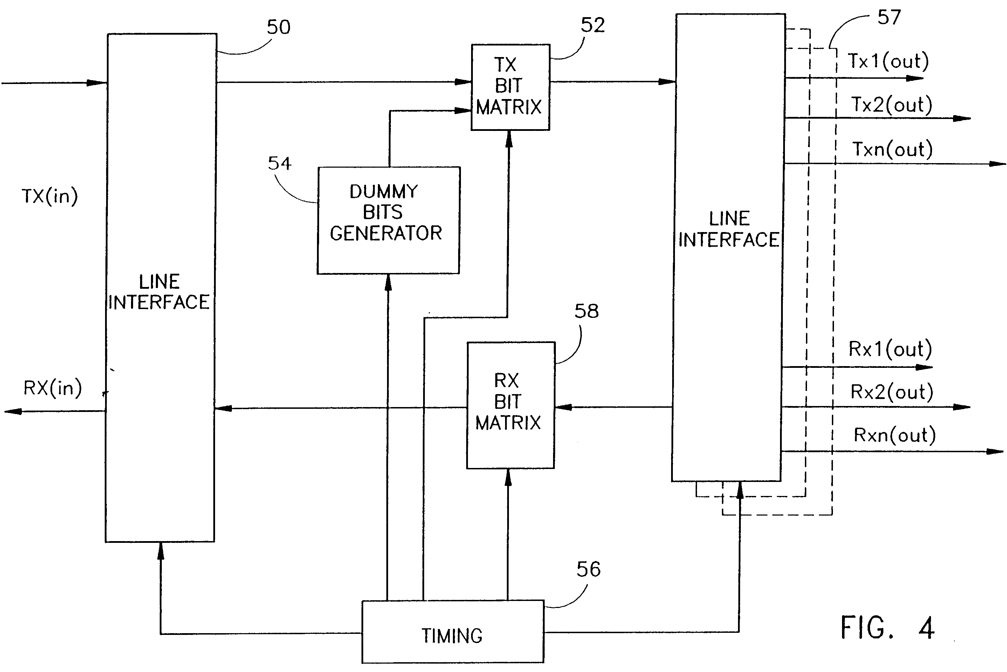

Reference is now made to Fig. 4, which illustrates a multiplexer-demultiplexer circuit useful in the apparatus of Figs. 1A & 1B.

The circuit of Fig. 4 will be initially described with respect to its application as circuitry 14 (Fig. 1A). In this application, a line interface 50 receives a compressed digital word, typically in the form illustrated at reference numeral 48 in Fig. 3, from compression apparatus 12 at Site A (Fig. 1). The received digital word is transferred to a Tx Bit Matrix 52 which is operative to add dummy bits, typically 6 in number, to the typically 2-bit compressed word. The dummy bits are provided by a dummy bit generator 54.

The resulting padded digital word, typically in the form illustrated at reference numeral 49 in Fig. 3, provided by the Tx Bit Matrix 52, is provided via one or more line interfaces 57 to transmission switch 16 at Site B (Fig. 1A).

Timing circuitry 56 interconnects the various elements of the multiplexer-demultiplexer circuitry and provides synchronization of the operation thereof.

When the circuit of Fig. 4 is employed as circuitry 18 (Fig. 1A), one or more line interfaces 57 receives a padded digital word, typically illustrated at reference numeral 49 in Fig. 3, including a 2-bit compressed word and 6 dummy bits, from transmission switch 16. The one or more line interfaces 57 supply the padded digital word to an Rx Bit Matrix 58. Rx Bit Matrix 58 is operative to separate the 6 dummy bits from the padded word and to combine four 2-bit compressed words into one 4 x 2-bit reconstructed digital word, which may be as illustrated at reference numeral 48 in Fig. 3. The thus reconstituted word is transmitted via line interface 50 to decompression apparatus 20 (Fig. 1).

Reference is now made to Figs. 5A & 5B, which illustrate part of a telecommunications network constructed and operative in accordance with a most preferred embodiment of the present invention. Here it is assumed that a call containing speech originates from site A and is directed to Site C, being routed via site B.

A transmission switch 110 at Site A directs the call via compression apparatus 112 at Site A, which compresses the speech.

In accordance with a preferred embodiment of the invention, at Site B, in a first mode of operation the call containing compressed speech is decompressed by multiplexer-dimultiplexer apparatus 114 and in a second mode of operation, the call containing compressed speech remains in compressed form at the multiplexer-demultiplexer apparatus 114. Instead the call is transferred digitally to a transmission switch 116 at Site B in a manner such that transmission switch 116 treats it like any other call.

Furthermore, multiplexer-demultiplexer apparatus 118 at the output end of transmission switch 116 at Site B is operative in the second mode of operation to retain the call containing compressed speech in compressed form and to transfer it, as received from Site A, to Site C, where it is decompressed by decompression apparatus 120 associated with a transmission switch 122, which directs the signal to the intended subscriber.

In accordance with a preferred embodiment of the present invention, a call originating at site A may be routed by transmission switch 116 at site B to a local switch 124 at site B. In this case, compression apparatus 114 is automatically caused to be operative in the first mode to decompress the compressed speech signal received thereby and to transmit this decompressed speech signal to local switch B, via transmission switch 116.

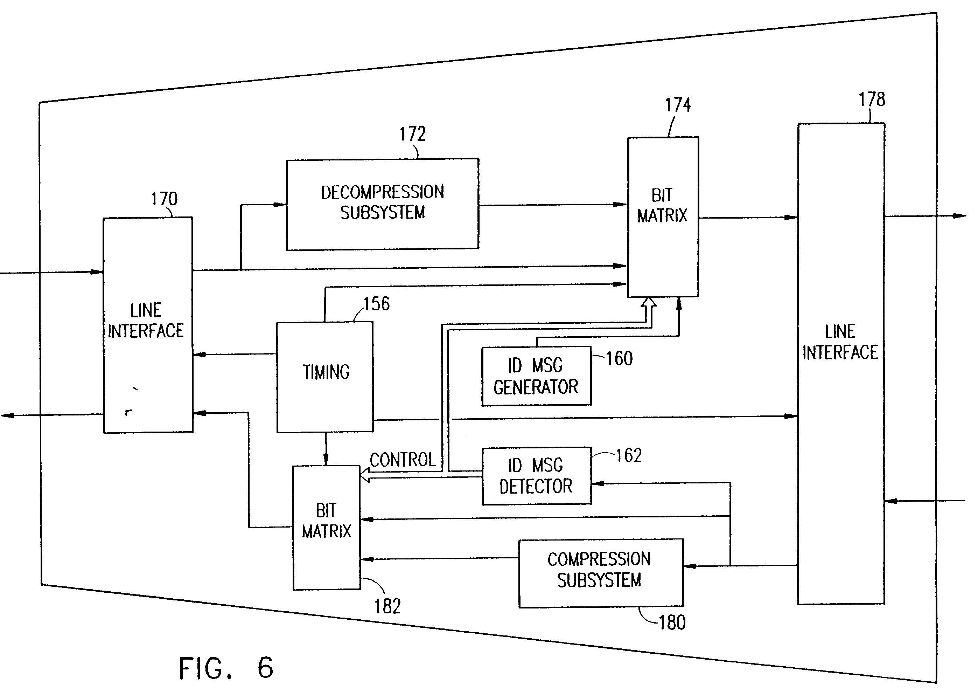

Reference is now made to Fig. 6, which illustrates an enhanced multiplexer-demultiplexer circuit useful in the apparatus of Figs. 5A & 5B, particularly in the functionality of selectably operable compression apparatus 114 and 118. The circuit of Fig. 6 provides all of the functionality of the circuitry of Fig. 4 and also includes ID message generator circuitry 160 and ID message detector circuitry 162.

The message generator circuitry 160 and the message detector circuitry 162 are operative to enable the multiplexer-demultiplexer to automatically adapt to the network. It is appreciated that the multiplexer-demultiplexer circuitry of Fig. 4 is only useful if it is present on both sides of a network node. The network node will not operate if only one multiplexer-demultiplexer of the type shown in Fig. 4 is present. Accordingly installation of a multiplexer-demultiplexer of the type shown in Fig. 4, requires network pre-configuration which provides coordination of the installation of the multiplexer-demultiplexer of Fig. 4 at all ends of the network.

The circuitry of Fig. 6 obviates the necessity of network preconfiguration in that each multiplexer-demultiplexer has two modes of operation, a first mode in which it produces compression and decompression as in the prior art and a second mode in which it avoids compression and decompression as described above in connection with Fig. 4.

The message generator 160 transmits a message along the network which identifies the multiplexer-demultiplexer as being of the type described in Figs. 4 or 6. Additionally, the message generation 160 includes in the message the type and format of the compression applied to the signal. The ID message detector 162 receives such a message along the network. Once a suitable handshake is established, whereby both multiplexer-demultiplexer circuits in the network are identified as being of the type described in Figs. 4 or 6, as distinguished from the prior art, both of the multiplexer-demultiplexers operate in the second mode of operation. The handshake provides exchange of information regarding the type and format of the compression applied to the signal so as to enable the decompression to correspond to the compression applied to each signal.

Should such a suitable handshake not be established, i.e. where at least one of the various multiplexer-demultiplexer circuits at the network node is not identified as being of the type described in Figs. 4 or 6, as distinguished from the prior art, neither of the multiplexer-demultiplexers operate in the second mode of operation.

It is to be appreciated that the transmission and detection of messages identifying the multiplexer-demultiplexers and the resulting handshakes may take place for each time slot, which may be independently routed through different network nodes for each conversation. Therefore the operation of the multiplexer-demultiplexer is selectably in the first mode or the second mode independently for each time slot, based on whether the ID message detector has detected a message identifying the existence of a similar Fig. 6 type multiplexer-demultiplexer or not.

It is to be appreciated that the above apparatus and functionality enables existing switching equipment to be employed for multiple site routing of compressed speech without the speech degradation and delay which would otherwise result from multiple compressions and decompressions.

Preferably, the messages are transmitted at a relatively low bit rate in the least significant bit of a certain percentage of the PCM words, thus causing relatively very low distortion. The format of the messages may be similar to that described in CCITT G.704 Paragraph 2.1. The messages each typically comprise two parts: an identification code having a unique pattern and an information portion indicating the type and format of the compression.

Further in accordance with a preferred embodiment of the present invention, the decompression subsystem 172 is modified so as to be able to decompress received bits and to transmit the most significant bits of the decompressed signal instead of dummy bits. The transmission of the most significant bits of the decompressed signal may have multiple uses. One example is to enable compressed speech to be heard at a network node switch. Another example is to enable detection of tones, such as DTMF tones, so as to enable the network node switch to provide functionalities, such as voice conferencing, in response thereto.

The enhanced multiplexer-demultiplexer circuitry of Fig. 6 includes a line interface 170, which receives compressed digital signals and transmits them to a decompression subsystem 172 which outputs to a bit processing matrix 174. The bit matrix 174 also receives the digital signals directly from the line interface 170.

Bit matrix 174 provides a multiple bit output, at least the most significant bit or bits thereof being provided by the output of decompression subsystem 172. The less significant bit or bits thereof may be provided by the digital signals received directly from the line interface 170.

ID message detector 162 is operative to provide a control signal to bit matrix 174 instructing it whether or not to substitute the compressed digital signals received directly from the line interface 170 for the least significant bits received as the output of decompression subsystem 172 as the least significant bit or bits of the bit matrix 174 output.

In the first mode of operation, the ID message detector 162 causes bit matrix 174 not to substitute the compressed digital signals for the least significant bits received as the output of decompression subsystem 172, thus provided full decompression and compression in the other direction correspondingly.

In the second mode of operation, the ID message detector 162 causes bit matrix 174 to insert the compressed digital signals for the least significant bits received as the output of decompression subsystem 172, thus avoiding compression and decompression. In second mode operation, the most significant bit or bits, which are provided by the output of the decompression subsystem 172 function in the system as dummy bits, except when it is sought to monitor compressed speech at a network node switch or to enable detection of tones, such as DTMF tones, so as to enable the network node switch to provide functionalities, such as voice conferencing, in response thereto.

The output of bit matrix 174 is supplied to a line interface 178, which typically outputs to a transmission switch, such as transmission switch 116 or 122 (Figs. 5A & 5B).

A digital signal received at line interface 178, typically from a transmission switch, such as transmission switches 116 or 122 (Figs. 5A & 5B) may be either compressed or not compressed. This digital signal is supplied in parallel to ID message detector 162, compression subsystem 180 and to a bit matrix 182. Bit matrix 182 is operated by ID message detector 162 for supplying either the output of compression subsystem 180 or the digital signal as received at line interface 178, without the dummy or decompressed signal most significant bits, to line interface 170.

The operation of ID message detector 162 is such that in the first mode of operation, it causes bit matrix 182 to supply the output of compression subsystem 180 to line interface 170, while in the second mode of operation, it causes bit matrix 182 to supply the output of line interface 178, without the dummy or decompressed signal most significant bits, directly to line interface 170.

It will be appreciated by persons skilled in the art that the present invention is not limited to what has been particularly shown and described hereinabove but is intended to include reasonable variations and modifications thereof. The scope of the invention is defined by the claims which follow:

## Claims

1. A digital communication system including:
at least one signal source producing a signal;
at least one signal compressor associated with the at least one signal source for operating on the signal and providing a compressed signal;
at least one signal receiver including a decompressor for decompressing said compressed signal; and
an intermediate switch receiving at least one compressed signal and forwarding said at least one compressed signal to said at least one signal receiver, the intermediate switch operating on said at least one compressed signal.

2. A digital communication system according to claim 1 and wherein said signal compressor and signal decompressor are selectably operable.

3. A digital communication system according to claim 2 and also comprising message generation and detection apparatus operative to detect at one site the presence of a signal compressor and decompressor at another site.

4. A digital communication system according to claim 3 and wherein said signal compressor and signal decompressor are selectably operable in response to detection by said message generation and detection apparatus.

5. A digital communication system according to claim 4 and wherein said at least one signal source comprises a multiplicity of signal sources, said at least one signal compressor comprises a multiplicity of signal compressors and said at least one signal receiver comprises a multiplicity of signal receivers and wherein detection and selectable operation of said multiplicity of signal compressors and signal decompressors takes place time slot by time slot.

6. A digital communication system according to claim 4 and wherein detection and selectable operation of said signal compressor and signal decompressor takes place time independently for each session.

7. A digital communication system according to claim 6 and wherein detection and selectable operation of said signal compressor and signal decompressor takes place time continuously.

8. A digital communication system according to claim 1 wherein said intermediate switch operates on a fixed number of bits per signal sample, and wherein filler bits are supplied to the intermediate switch along with the compressed signal.

9. A digital communication system according to claim 8 and wherein said filler bits are dummy bits.

10. A digital communication system according to claim 8 and wherein said filler bits include decompressed signal bits.

11. A digital communication system according to claim 8 and wherein a number of filler bits is supplied to the intermediate switch per signal portion, said number being approximately equal to the difference between the fixed number of bits and the number of bits per compressed signal portion.

12. A digital communication system according to claim 11 and wherein said number of filler bits is an integer.

13. A digital communication system according to claim 11 and wherein said number of filler bits is a non-integer.

14. A digital communication system according to claim 8 and wherein the fixed number of bits is equal to 8.

15. A digital communication system according to claim 1 and wherein the intermediate switch operates on PCM coded speech signals.

16. A digital communication method comprising:
causing at least one signal source to produce a signal;
causing at least one signal compressor associated with the at least one signal source to operate on the signal and provide a compressed signal;
causing a decompressor to decompresses a signal at at least one signal receiver; and
employing an intermediate switch to receive at least one compressed signal and forward said at least one compressed signal to said at least one signal receiver, the intermediate switch operating on said at least one compressed signal.

17. A digital communication method according to claim 16 and wherein said signal compressor and signal decompressor are selectably operable.

18. A digital communication method according to claim 17 and also comprising message generation detection operative to detect at one site the presence of a signal compressor and decompressor at another site.

19. A digital communication method according to claim 18 and wherein said signal compressor and signal decompressor are selectably operable in response to detection by said message generation and detection apparatus.

20. A digital communication method according to claim 19 and wherein multiple signal compressors and decompressors are provided and wherein detection and selectable operation of said signal compressors and signal decompressors takes place time slot by time slot.

21. A digital communication method according to claim 19 and wherein detection and selectable operation of said signal compressor and signal decompressor takes place time independently for each session.

22. A digital communication method according to claim 21 and wherein detection and selectable operation of said signal compressor and signal decompressor takes place time continuously.

23. A digital communication method according to claim 16 which operates on a fixed number of bits per signal sample and wherein filler bits are supplied to the intermediate switch along with the compressed signal.

24. A digital communication method according to claim 23 and wherein said filler bits are dummy bits.

25. A digital communication method according to claim 23 and wherein said filler bits include decompressed signal bits.

26. A digital communication method according to claim 23 and wherein a number of filler bits is supplied to the intermediate switch per signal portion, said number being equal to the difference between the fixed number of bits and the number of bits per compressed signal portion.

27. A digital communication method according to claim 26 and wherein said number of filler bits is an integer.

28. A digital communication method according to claim 26 and wherein said number of filler bits is a non-integer.

29. A digital communication method according to claim 16 and wherein the fixed number of bits is equal to 8.

30. A digital communication method according to claim 16 and wherein the intermediate switch operates on PCM coded speech signals.
